# EUROPEAN PATENT APPLICATION

(11) **EP 2 568 633 A1**
(43) Date of publication of application: **13.03.2013**
(21) Application number: 11777490.1
(22) Date of filing: 27.04.2011
(51) Int. Cl.: H04J 11/00

(54) **TRANSMITTING APPARATUS, TRANSMITTING METHOD AND TRANSMITTING SYSTEM**

(30) Priority: 07.05.2010 JP 2010107075
(71) Applicant: NEC Corporation, Tokyo 108-8001 (JP)
(72) Inventor: OGATA, Hideki, Tokyo 108-8001 (JP)
(74) Representative: Glawe, Delfs, Moll
(86) International application number: PCT/JP2011/060677
(87) International publication number: WO 2011/138971

(57) **Abstract**

In order to improve the efficiency of removing a component of a signal different from a target received signal, a transmission apparatus includes: a reception means for receiving a first signal transmitted by a first transmission apparatus, and removing a component of a second signal transmitted by a second transmission apparatus, the second signal being received along with the first signal, using a third signal inputted from a third transmission apparatus receiving the second signal; a control means for setting a first modulation method based on the first signal, and generating first information, the first information being information including directions to change a modulation method of the first signal and a modulation method of the second signal to the first modulation method; and a transmission means for transmitting the first information to the first transmission apparatus.

## Description

### TECHNICAL FIELD

The present invention relates to a transmission apparatus, a transmission method and a transmission system, and, more particularly, to a transmission apparatus, a transmission method and a transmission system, an object of which is to remove the components of a signal different from a target signal.

### BACKGROUND ART

In a radio transmission system, a cross polarization transmission method which transmits two independent signals by an identical frequency using V (Vertical) polarized wave and H (Horizontal) polarized wave which cross at right angles with each other in order to use the frequency effectively has been in practical use. In the cross polarization transmission method, there are cases where a wireless signal having a polarized wave different from a target line leaks out to a received signal due to the limitation of the polarized wave separation performance of an antenna, a change in a propagation environment and the like. Signal components of a polarized wave not being the target that are included in a received signal becomes a noise source to the received signal being the target. Accordingly, a radio transmission system using the cross polarization transmission method needs to remove from a received signal a signal having a polarized wave different from that of the received signal to keep good line quality.

As a technology for removing a signal with a different polarized wave from a received signal, Cross Polarization Isolation Compensation (hereinafter, it is referred to as "XPIC") method is known. The XPIC method is a technology which, in a radio transmission system to which a radio channel is set by V polarized wave and H polarized wave of an identical frequency, combines a demodulated signal of a target polarized wave and a demodulated signal of a different polarized wave and removes components of the different polarized wave within the target polarized wave. For example, the XPIC method performs a process that a signal received by a receiving device of H polarization is inputted to a receiving device of V polarization, and that the signal components of H polarization included in a received signal of V polarization are removed, for example. Patent literature 1 describes the structure of a transmission system equipped with such XPIC method.

As the function for optimizing the transmission capacity according to the condition of the transmission line, the adaptive modulation function is known. A transmission apparatus equipped with the adaptive modulation function determines a modulation method based on the condition of a transmission line. For example, according to the reception condition of a signal, a transmission apparatus equipped with the adaptive modulation function directs a transmission apparatus transmitting the signal to adopt a modulation method that can reduce transmission error to tolerable level or less. Patent literature describes a structure of a wireless communication device equipped with the adaptive modulation function. Patent literature 3 describes a structure of a base station apparatus which performs adaptive modulation processing following directions from a modulation method control unit.

By setting up a radio transmission system of a cross polarization, transmission method using radio transmission apparatus with the adaptive modulation function, the radio transmission system which optimizes the transmission capacity according to a condition of a transmission line while effectively using a frequency can be constructed.

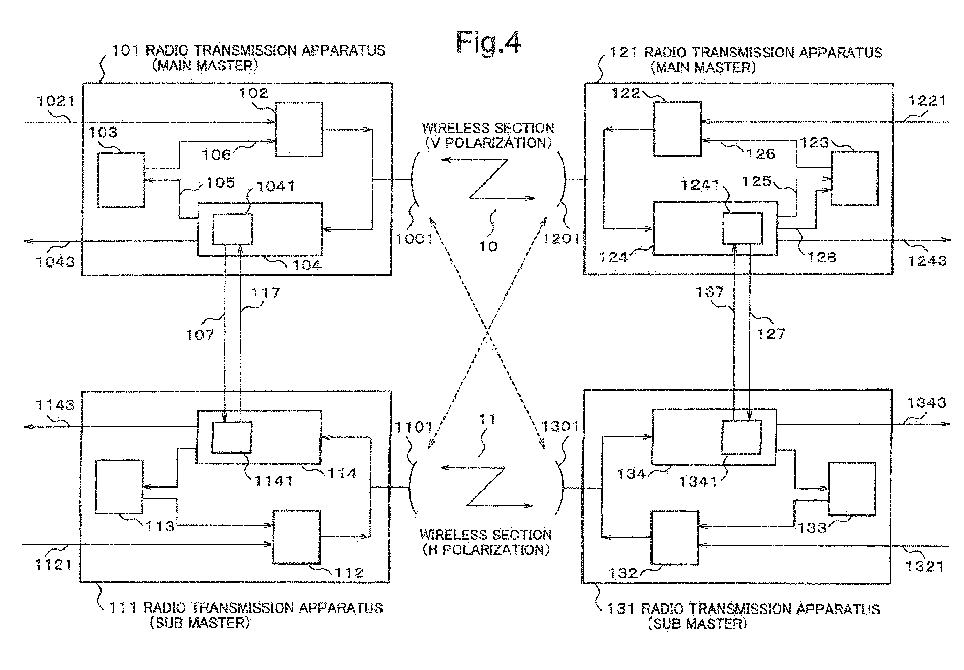

Fig. 4 is a diagram showing a structure of a radio transmission system related to the present invention. The radio transmission system shown in Fig. 4 transmits data by radio transmission using the cross polarization transmission method. In Fig. 4, a radio transmission apparatus 101 and a radio transmission apparatus 121 communicate with each other by a radio wave of V polarization. A radio transmission apparatus 111 and a radio transmission apparatus 131 communicate with each other by a radio wave of H polarization. A radio transmission apparatus which sends and receives a radio wave of V polarization and a radio transmission apparatus which sends and receives a radio wave of H polarization operate in a manner one of them being synchronized with the other. In Fig. 4, description will be made about a case in which a radio transmission apparatus which sends and receives a radio wave of V polarization is the synchronous origin (Main Master), and a radio transmission apparatus which sends and receives a radio wave of H polarization is Sub Master which operates in a manner being synchronized with the radio transmission apparatus which sends and receives a radio wave of V polarization.

In Fig. 4, the radio transmission apparatus 101 and 121 are the Main Masters, and perform radio transmission in a wireless section 10 by V polarization. The radio transmission apparatus 111 and 131 are the Sub Masters, and perform radio transmission in a wireless section 11 by H polarization.

The radio transmission apparatus 101 includes a modulation unit 102, a control unit 103 and a demodulation unit 104. The radio transmission apparatus 111 includes a modulation unit 112, a control unit 113 and a demodulation unit 114. The radio transmission apparatus 121 includes a modulation unit 122, a control unit 123 and a demodulation unit 124. The radio transmission apparatus 131 includes a modulation unit 132, a control unit 133 and a demodulation unit 134.

The demodulation unit 104 has an XPIC processing unit 1041. The demodulation units 114, 124 and 134 also have XPIC processing units 1141, 1241 and 1341 similarly.

An antenna 1001 is connected to the modulation unit 102 and the demodulation unit 104 of the radio transmission apparatus 101. The antenna 1001 transmits a transmission signal inputted from the modulation unit 102 toward an antenna 1201 as a radio wave, and receives a transmission signal transmitted from the antenna 1201 to output it to the demodulation unit 104. Antennas 1101, 1201 and 1301 are connected to the radio transmission apparatus 111, 121 and 131, respectively, and perform the same operation as the antenna 1001.

The radio transmission apparatus 101 demodulates a signal received from the radio transmission apparatus 121 via the antennas 1201 and 1001 by the demodulation unit 104, and outputs from the demodulated signal an opposite modulation method determination result 105 and a received data 1043. The control unit 103 is equipped with the adaptive modulation function, and changes a modulation method used by the modulation unit 102 and the demodulation unit 104 based on information inputted from the demodulation unit 104. The modulation unit 102 modulates transmission data 1021 and information inputted from the control unit 103 using the modulation method that has been notified from the control unit 103, and transmits the modulated signals to the radio transmission apparatus 121 via the antenna 1001.

The above is the description about the operations of each unit of the radio transmission apparatus 101. The radio transmission apparatus 111, 121 and 131 also perform the same operations as the radio transmission apparatus 101. That is, a portion in each of the radio transmission apparatus 111, 121 and 131 shown in Fig. 4 having an identical name corresponding to the radio transmission apparatus 101 performs the same operation as that of the radio transmission apparatus 101.

Here, the polarization of the radio wave used in Main Master and Sub Master are orthogonal to each other. Accordingly, when the polarized waves are separated ideally in the wireless section and the antennas, a received signal of each of the Main Master and the Sub Master does not include signal components of its counterpart. However, in fact, due to a change in the transmission condition of a transmission line and limit of the performance of an antenna, interference of a signal occurs between polarizations by the routes of the dashed lines of Fig. 4 between Main Master and Sub Master.

For this reason, the demodulation unit of each radio transmission apparatus has a function to perform XPIC processing in order to remove interference of signals between polarized waves.

Between the XPIC processing unit 1241 of the radio transmission apparatus 121 and the XPIC processing unit 1341 of the radio transmission apparatus 131, signals 127 and 137 for different polarized wave removal are sent and received to/from each other in order to perform the XPIC processing. That is, the XPIC processing unit 1241 outputs the signal for different polarized wave removal 127 to the XPIC processing unit 1341, and the XPIC processing unit 1341 transmits the signal for different polarized wave removal 137 to the XPIC processing unit 1241.

The XPIC processing unit 1241 removes H polarization components included in a received signal transmitted by V polarization from the radio transmission apparatus 101 using the signal for different polarized wave removal 137 received from the XPIC processing unit 1341. Similarly, the XPIC processing unit 1341 removes V polarization components included in a received signal transmitted by H polarization from the radio transmission apparatus 101 using the signal for different polarized wave removal 127 received from the XPIC processing unit 1241. Here, because the procedure of XPIC processing that removes, in the XPIC processing units 1241 and 1341, different polarized wave components included in a received signal of an own station using a signal for different polarized wave removal is known well, detailed description is omitted.

The XPIC processing for signals received by the radio transmission apparatus 121 and 131 has been described above. Also in the radio transmission apparatus 101 and 111, similar XPIC processing is performed for signals received by the radio transmission apparatus 101 and 111 by the XPIC processing units 1041 and 1141.

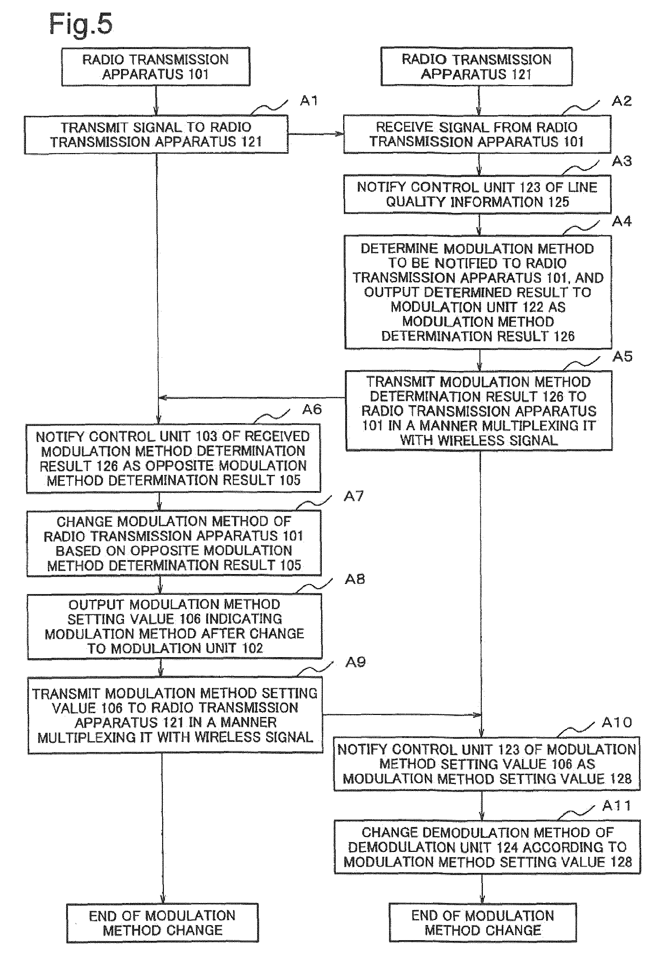

Next, setting-operation of a modulation method in a radio transmission system having the structure of Fig. 4 will be described using Fig. 5. Fig. 5 is a flow chart showing an operation of a radio transmission system related to the present invention. In the following description, a procedure for determining a modulation method to be used for modulation of a wireless signal transmitted from the radio transmission apparatus 101 to the radio transmission apparatus 121 according to receiving quality in the demodulation unit 124 of the radio transmission apparatus 121 will be described. Meanwhile, in the following description, the function of each unit of the radio transmission apparatus 101 and 121 is also possessed by the other radio transmission apparatus shown in Fig. 4 commonly.

When the radio transmission apparatus 101 transmits a signal to the radio transmission apparatus 121 (Step Al), the demodulation unit 124 of the radio transmission apparatus 121 receives the signal from the radio transmission apparatus 101 (Step A2). Then, the demodulation unit 124 notifies the control unit 123 of line quality information 125 which is information indicating the quality of the received wireless signal (Step A3). Next, the control unit 123 determines a modulation method to be notified the radio transmission apparatus 101 based on the line quality information 125, and outputs the determined result to the modulation unit 122 as a modulation method determination result 126 (Step A4). The modulation unit 122 transmits the modulation method determination result 126 to the radio transmission apparatus 101 in a manner multiplexing the modulation method determination result 126 and a wireless signal (step A5).

The demodulation unit 104 of the radio transmission apparatus 101 notifies the control unit 103 of the modulation method determination result 126 received from the radio transmission apparatus 121 as the opposite modulation method determination result 105 (Step A6). The control unit 103 changes the modulation method of the radio transmission apparatus 101 based on the opposite modulation method determination result 105 (Step A7). In order to notify the radio transmission apparatus 121 of the changed modulation method, the control unit 103 outputs a modulation method setting value 106 that indicates the modulation method after change to the modulation unit 102 (Step A8). The modulation unit 102 transmits the modulation method setting value 106 to the radio transmission apparatus 121 in a manner multiplexing the modulation method setting value 106 with a wireless signal (Step A9).

The demodulation unit 124 of the radio transmission apparatus 121 notifies the control unit 123 of the modulation method setting value 106 which has been notified from the radio transmission apparatus 101 as a modulation method setting value 128 (Step A10). The control unit 123 changes the demodulation modulation method of the demodulation unit 124 according to the modulation method setting value 128 (Step A11).

By the above mentioned procedure, the modulation methods of the modulation unit of the radio transmission apparatus 101 and the demodulation unit of the radio transmission apparatus 121 are changed based on the receiving condition of the radio transmission apparatus 121. In the radio transmission system shown in Fig. 4, by a similar operation, the modulation methods of the modulation unit of the radio transmission apparatus 121 and the demodulation unit of the radio transmission apparatus 101 are changed based on the receiving condition of the radio transmission apparatus 101.

Also in the Sub Masters, the modulation methods of the modulation unit 112 of the radio transmission apparatus 111 and a demodulation unit 132 of the radio transmission apparatus 131 are changed based on the receiving condition of the radio transmission apparatus 131. The modulation methods of the modulation unit 132 of the radio transmission apparatus 131 and a demodulation unit 112 of the radio transmission apparatus 111 are changed based on the receiving condition of the radio transmission apparatus 111.

Thus, in the radio transmission system shown in Fig. 4, each of the line of Main Master and the line of Sub Master operates using a modulation method set for each line independently.

### PRIOR ART DOCUMENT

### Patent Literature

[Patent literature 1] Japanese Patent Application Laid-Open No. 2000-165339 (paragraphs [0008]-[0016])
[Patent literature 2] Published Japanese translation of PCT application No. 2007-515850 bulletin (paragraph [0007])
[Patent literature 3] Japanese Patent Publication No. 3844758 (paragraph [0036])

### DISCLOSURE OF THE INVENTION

### TECHNICAL PROBLEMS

In a radio transmission system adopting both technologies of the cross polarization transmission method disclosed in patent literature 1 and the adaptive modulation method disclosed in patent literature 2 or a patent literature 3, the adaptive modulation method is applied to a transmission line using V polarization and a transmission line using H polarization, respectively. That is, the modulation methods of a wireless signal of V polarization and a wireless signal of H polarization are determined according to line quality of the respective transmission lines independently. For this reason, there is a case where the modulation method of a radio transmission apparatus which sends and receives a radio wave of V polarization and the modulation method of a radio transmission apparatus which sends and receives a radio wave of H polarization are not the same depending on radio transmission conditions.

However, when the modulation method of a radio transmission apparatus which sends and receives a radio wave of V polarization and the modulation method of a radio transmission apparatus which sends and receives a radio wave of H polarization are not the same, there is a risk that components of a different polarized wave cannot be removed sufficiently even if the XPIC processing is performed to a received signal. That is, in a radio transmission system adopting the both technologies of the cross polarization transmission method and the adaptive modulation method, there is a problem that the effect of the XPIC method cannot be obtained sufficiently when the modulation methods used for respective lines having different polarized waves from each other are different, and thus quality of a received signal may be decreased.

An object of the present invention is to provide, in a radio transmission system equipped with both functions of the cross polarization transmission method and the adaptive modulation method, a means for settling the problem that the effect of the XPIC method may not be able to be obtained sufficiently.

### TECHNICAL SOLUTION

A transmission apparatus of the present invention includes: a reception means for receiving a first signal transmitted by a first transmission apparatus, and removing a component of a second signal transmitted by a second transmission apparatus, the second signal being received along with the first signal, using a third signal inputted from a third transmission apparatus receiving the second signal; a control means for determining a first modulation method based on the first signal, and generating first information, the first information being information including directions to change a modulation method of the first signal and a modulation method of the second signal to the first modulation method; and a transmission means for transmitting the first information to the first transmission apparatus.

A transmission method of the present invention receives a first signal transmitted by a first transmission apparatus; removes a component of a second signal transmitted by a second transmission apparatus, the second signal being received along with the first signal, using a third signal inputted from a third transmission apparatus receiving the second signal; determines a first modulation method based on the first signal; generates first information, the first information being information including directions to change a modulation method of the first signal and a modulation method of the second signal to the first modulation method; and transmits the first information to the first transmission apparatus.

### ADVANTAGEOUS EFFECT OF THE INVENTION

The present invention has an effect that the efficiency of removing components of a signal different from a target signal included in the target signal is improved.

### Brief Description of the Drawings

[Fig. 1] Fig. 1 is a diagram showing a structure of a radio transmission system of the first exemplary embodiment of the present invention.
[Fig. 2] Fig. 2 is a flow chart showing setting-operation of a modulation method in a radio transmission system of the first exemplary embodiment of the present invention.
[Fig. 3] Fig. 3 is a diagram showing a structure of a transmission apparatus of a second exemplary embodiment of the present invention.
[Fig. 4] Fig. 4 is a diagram showing a structure of a radio transmission system related to the present invention.
[Fig. 5] Fig. 5 is a flow chart showing setting-operation of a modulation method in a radio transmission system related to the present invention.

### BEST MODE FOR CARRYING OUT THE INVENTION

### [First exemplary embodiment]

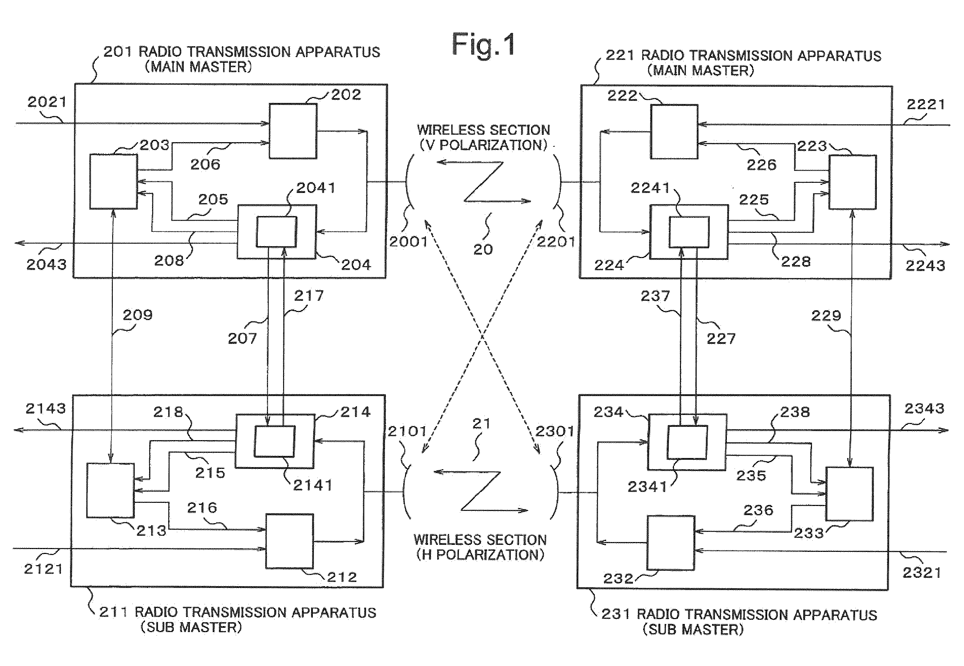

Fig. 1 is a diagram showing a structure of a radio transmission system of the first exemplary embodiment of the present invention. A radio transmission system shown in Fig. 1 includes radio transmission apparatus 201, 211, 221 and 231 each equipped with the XPIC function and the adaptive modulation function.

In Fig. 1, the radio transmission apparatus 201 and 221 are the Main Masters, and perform wireless transmission in a wireless section 20 by V polarization. The radio transmission apparatus 211 and 231 are the Sub Masters, and operate in a manner being synchronized with the radio transmission apparatus that are the Main Masters. The radio transmission apparatus 211 and 231 perform wireless transmission in a wireless section 21 by H polarization.

The radio transmission apparatus 201 includes a modulation unit 202, a control unit 203 and a demodulation unit 204. The radio transmission apparatus 211 includes a modulation unit 212, a control unit 213 and a demodulation unit 214. The radio transmission apparatus 221 includes a modulation unit 222, a control unit 223 and a demodulation unit 224. The radio transmission apparatus 231 includes a modulation unit 232, a control unit 233 and a demodulation unit 234.

An antenna 2001 is connected to the modulation unit 202 and the demodulation unit 204 of the radio transmission apparatus 201. The antenna 2001 transmits a transmission signal inputted from the modulation unit 202 toward an antenna 2201 as a radio wave, and receives a transmission signal transmitted from the antenna 2201 to output it to the demodulation unit 204. Antennas 2101, 2201 and 2301 are connected to the radio transmission apparatus 211, 221 and 231, respectively, and operate in a similar manner to the antenna 2001.

The radio transmission apparatus 201 demodulates a signal received from the radio transmission apparatus 221 via the antennas 2201 and 2001 using the demodulation unit 204, and outputs an opposite modulation method determination result 205 and a received data 2043 from the demodulated signal. The control unit 203 is equipped with the adaptive modulation function, and changes the modulation method used by the modulation unit 202 and the demodulation unit 204 based on information inputted from the demodulation unit 204. The modulation unit 202 modulates transmission data 2021 and information which has been inputted from the control unit 203 using a modulation method notified from the control unit 203, and transmits the modulated signal to the radio transmission apparatus 221 via the antennas 2001 and 2201.

The operations of each part of the radio transmission apparatus 201 has been described above. The radio transmission apparatus 211, 221 and 231 also perform the same operations as the radio transmission apparatus 201. That is, a portion in the radio transmission apparatus 211, 221 and 231 shown in Fig. 1 having an identical name corresponding to that of the radio transmission apparatus 201 also performs a similar operation.

In the radio transmission system of the first exemplary embodiment shown in Fig. 1, a polarized radio wave of Main Master and that of Sub Master are orthogonal to each other. Accordingly, when separation of the polarized waves are performed ideally in a wireless section and antennas, each of received signals of Main Master and Sub Master does not include signal components of the other, respectively. However, in reality, due to a change in the transmission condition of the transmission line and the performance limit of the antennas, interference of signals occurs between polarized waves of Main Master and Sub Master by the routes of the dashed lines of Fig. 1.

For this reason, the demodulation unit of each radio transmission apparatus has a function to perform the XPIC processing in order to remove signal interference between the polarized waves. That is, the demodulation unit 204 has a XPIC processing unit 2041. The demodulation units 214, 224 and 234 also have XPIC processing units 2141, 2241 and 2341 similarly.

Between the XPIC processing unit 2241 of the radio transmission apparatus 221 and the XPIC processing unit 2341 of the radio transmission apparatus 231, signals for different polarized wave removal 227 and 237 are sent and received to/from each other. That is, the XPIC processing unit 2241 outputs the signal for different polarized wave removal 227 to the XPIC processing unit 2341, and the XPIC processing unit 2341 transmits the signal for different polarized wave removal 237 to the XPIC processing unit 2241.

The XPIC processing unit 2241 removes H polarization components included in a received signal transmitted from the radio transmission apparatus 201 by V polarization using the signal for different polarized wave removal 237 received from the XPIC processing unit 2341. Similarly, the XPIC processing unit 2341 removes V polarization components included in a received signal transmitted from the radio transmission apparatus 211 by H polarization using the signal for different polarized wave removal 227 received from the XPIC processing unit 2241. Here, because the procedure of XPIC processing that removes, in the XPIC processing units 2241 and 2341, different polarized wave components included in a received signal of an own station using a signal for different polarized wave removal is known well, detailed description is omitted.

A configuration for performing the XPIC processing to a signal which the radio transmission apparatus 221 and 231 receive has been described above. Also in the radio transmission apparatus 201 and 211, the XPIC processing is performed by the XPIC processing unit 2041 and 2141 to a signal which the radio transmission apparatus 201 and 211 receives.

A radio transmission system shown in Fig. 1 operates so that modulation methods used for communication between the radio transmission apparatus 201 and 221 which are the Main Masters and communication between the radio transmission apparatus 211 and 231 which are the Sub Masters may be made identical. For this reason, the control unit 203 of the radio transmission apparatus 201 and the control unit 213 of the radio transmission apparatus 211 are connected as inter-control-unit communication 209. Also, the control unit 223 of the radio transmission apparatus 221 and the control unit 233 of the radio transmission apparatus 231 are connected as inter-control-unit communication 229.

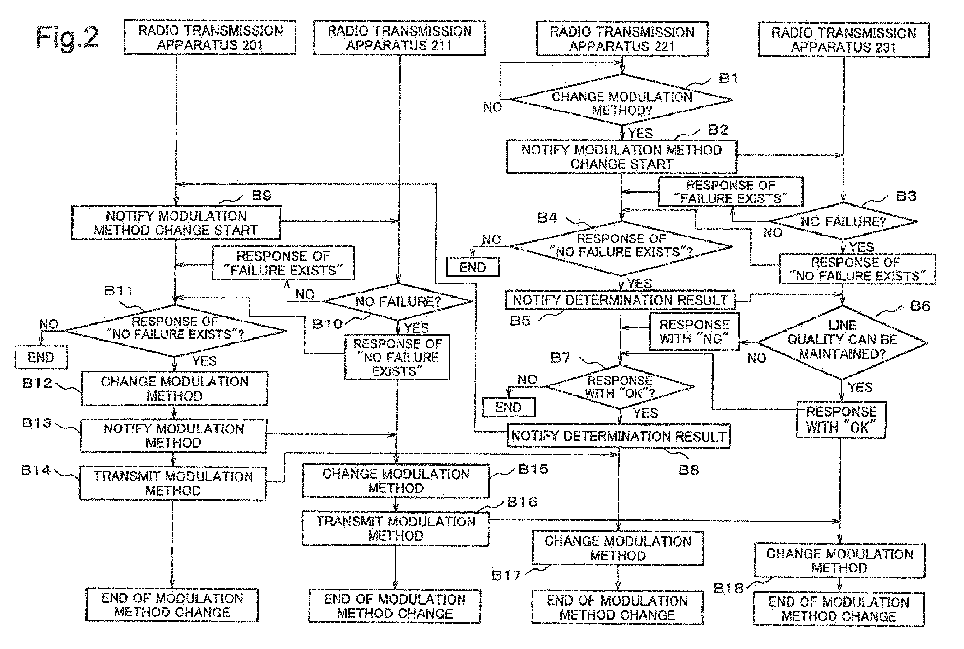

Operations to make modulation methods of the Main Masters and the Sub Masters match in a radio transmission system of the first exemplary embodiment will be described below using Fig. 2. In Fig. 2, description will be made taking the case where a modulation method which a Main Master, that is, the radio transmission apparatus 221 using V polarization, has set is also set to the Sub Masters as an example.

Fig. 2 is a diagram showing the setting-operation of a modulation method in a radio transmission system of the first exemplary embodiment shown in Fig. 1. In Fig. 2, the control unit 223 of the radio transmission apparatus 221 determines whether change of the modulation method of a received signal is needed or not based on line quality information 225 indicating the quality of a received signal in the demodulation unit 224 (Step B1). When it is determined that change of the modulation method is needed (step B1: YES), the control unit 223 transmits a modulation method change start notification to the control unit 233 of the radio transmission apparatus 231 using the inter-control-unit communication 229 (Step B2).

The control unit 233 of the radio transmission apparatus 231 checks presence or absence of a failure which disturbs modulation method control over the radio transmission apparatus. 211 opposing the radio transmission apparatus 231 (Step B3). The failure whose presence or absence is checked includes a line failure and a hardware failure, for example. Then, the control unit 233 replies to the control unit 223 as a reply that indicates a check result of "no failure exists" or "a failure exists" using the inter-control-unit communication 229.

The control unit 223 checks the reply from the control unit 233 (Step B4). When the control unit 223 receives a reply of "not failure exists" from the control unit 233 (step B4: YES), the control unit 223 notifies the control unit 233 of the modulation method determination result using the inter-control-unit communication 229 (step B5).

In the case where there is no reply from the control unit 233 or the content of reply is "a failure exists" (step B4: NO), the control unit 223 determines that the modulation method of the Main Masters and the Sub Masters cannot be changed to an identical modulation method, and finishes the controlling.

The control unit 233 presumes line quality of the case when the modulation method of the radio transmission apparatus 231 is changed according to the modulation method determination result notified at step B5 using current line quality information 235. Here, the control unit 233 presumes whether it is possible to maintain predetermined line quality in the Sub Masters even if the modulation method indicated by the modulation method determination result determined by the Main Master is used (Step B6).

When it is presumed that the predetermined line quality can be maintained even if the modulation method indicated by the modulation method determination result is used (step B6: YES), the control unit 233 replies to the control unit 223 with "OK".

On the other hand, in a case when the line quality of a signal which propagates the wireless section 21 is not so good, it the control unit 233 changes the modulation method to a higher-speed modulation method following directions from the control unit 223, there is a risk that the line quality of the Sub Masters falls below a desired value of the system. When the line quality of the Sub Masters falls below the desired value of the system, necessity to change the modulation method to a modulation method having a smaller modulation level once again arises in order to maintain the line quality, for example. For this reason, when the control unit 233 presumes that the predetermined line quality cannot be maintained if the modulation method determined in the Main Master is used (step B6: NO), the control unit 233 replies to the control unit 223 with "NG" in order to evade frequent change of the modulation method.

The control unit 223 checks the reply from the control unit 233 (Step B7). When the reply is "OK" (step B7: YES), a modulation method determination result 226 is modulated by the modulation unit 222, and is notified to the control unit 203 of the radio transmission apparatus 201 via the wireless section 20 (Step B8). When the reply of Step B6 is "NG" (step B7: NO), the control unit 223 finishes the control without notifying the control unit 203 of the modulation method determination result 226.

The control unit 203 of the radio transmission apparatus 201 outputs the modulation method determination result 226 from the control unit 223 to the control unit 203 as the opposite modulation method determination result 205. Then, the control unit 203 issues a modulation method change start notification to the control unit 213 of the radio transmission apparatus 211 using the inter-control-unit communication 209 (Step B9).

The control unit 213 of the radio transmission apparatus 211 checks whether there is a failure which disturbs modulation method control of the radio transmission apparatus 211 such as a line failure and a hardware failure just like Step B3 (Step B10). When there are no failures as a result, the control unit 213 replies to the control unit 203 with "no failure exists" using the inter-control-unit communication 209 (step B10: YES). When there is a failure, the control unit 213 replies to the control unit 203 with "a failure exists" using the inter-control-unit communication 209 (step B10: NO).

The control unit 203 checks the reply from the control unit 213 (Step B11). When a reply as "no failure exists" is received from the control unit 213 (step B11: YES), the control unit 203 determines that it is possible to change the modulation method. The control unit 203 changes the modulation method of the modulation unit 202 of the radio transmission apparatus 201 according to the opposite modulation method determination result 205 (Step B12). Then, the control unit 203 notifies the control unit 213 of the radio transmission apparatus 211 of the modulation method after change using the inter-control-unit communication 209 (Step B13).

Further, the control unit 203 inputs the modulation method after change to the modulation unit 202 as a modulation method setting value 206. The modulation unit 202 modulates the modulation method setting value 206 and transmits it to the radio transmission apparatus 221 (Step B14).

When there are no replies from the control unit 213 or when receiving a response with "NG" (step B11: NO), the control unit 203 determines that the modulation method of the Main Masters and the Sub Masters cannot be changed to an identical modulation method, and finishes the control without changing the modulation method.

The control unit 213 of the radio transmission apparatus 211 changes the modulation method of the modulation unit 212 according to the modulation method after change which has been notified from the control unit 203 (Step B15). Then, the control unit 213 outputs the modulation method after change to the modulation unit 212 as a modulation method setting value 216. The modulation unit 212 modulates the modulation method setting value 216 and transmits it to the radio transmission apparatus 231 to notify the control unit 233 of the modulation method after change (Step B16).

Further, the demodulation unit 224 of the radio transmission apparatus 221 outputs the modulation method setting value 206 that has been notified from the control unit 203 to the control unit 223 as an opposite modulation method setting value 228. The control unit 223 changes the modulation method of the demodulation unit 224 according to the opposite modulation method setting value 228 (Step B17).

Similarly, the demodulation unit 234 of the radio transmission apparatus 231 outputs the modulation method setting value 216 that has been notified from the radio transmission apparatus 211 to the control unit 233 as an opposite modulation method setting value 238. The control unit 233 changes the modulation method of the demodulation unit 234 according to the opposite modulation method setting value 238 (Step B18).

By the above mentioned procedure, setting is made so that the modulation methods of wireless signals of a direction of transmission from the radio transmission apparatus 201 to the radio transmission apparatus 221 and a direction of transmission from the radio transmission apparatus 211 to the radio transmission apparatus 231 may become identical in both of transmission and reception.

That is, in a radio transmission system equipped with the cross polarization interference compensation function and the adaptive modulation function, a radio transmission system of the first exemplary embodiment can make the modulation methods of wireless signals of V polarization and H polarization identical. As a result, when a signal of a polarized wave different from a signal of the target polarized wave is removed using the XPIC method, radio transmission apparatus which receive wireless signals of V polarization and H polarization can improve that effect.

In other words, a radio transmission system of the first exemplary embodiment has an effect to improve efficiency of removing components of a signal different from a target received signal, the components being included in a received signal.

The reason of this is that, in a radio transmission system of the first exemplary embodiment, a modulation methods determined by the radio transmission apparatus 221 based on receiving condition is notified to the radio transmission apparatus 201, and, in addition, the modulation method is also applied as the modulation method of the radio transmission apparatus 211. As a result of the modulation method of a wireless signal which the radio transmission apparatus 221 receives becoming the identical modulation method, a radio transmission system of the first exemplary embodiment can improve the effect of removing a signal received from the radio transmission apparatus 211 by the XPIC method in the radio transmission apparatus 221.

Meanwhile, in Steps B12, B15, B17 and B18 of Fig. 2, description has been made taking a case where only a modulation method of any one of modulation unit and demodulation unit of each radio transmission apparatus is changed. However, in Steps B12, B15, B17 and B18, the modulation methods of both of the modulation unit and the demodulation unit of each radio transmission apparatus may be changed. By changing the modulation methods of both of the modulation unit and the demodulation unit of each radio transmission apparatus simultaneously, setting is made so that the modulation methods of wireless signals of the direction from the radio transmission apparatus 221 to the radio transmission apparatus 201 and of the direction from the radio transmission apparatus 231 to the radio transmission apparatus 211 may also become identical. As a result, only by carrying out the flow of Fig. 2 once, all the modulation methods of the radio transmission system indicated in Fig. 1 can be set so that they may become identical.

Meanwhile, when there are no responses from the control unit 233 or the contents of the reply is "a failure exists" at step B4, the modulation method of the Sub Masters may not be changed, and only the modulation method of the Main Masters may be changed.

When there are no replies from the control unlit 213 in Step B11, or the contents of the reply is "NG", the modulation method of the Sub Masters may not be changed, and only the modulation method of the Main Masters may be changed.

Further, in a radio transmission system of the first exemplary embodiment, a radio transmission apparatus of Main Master and a radio transmission apparatus of Sub Master are different apparatus. Therefore, signals 207, 217, 227 and 237 for different polarized wave removal and the inter-control-unit communication 209 and 229 are connected between the apparatus. However, when a radio transmission apparatus of Main Master and a radio transmission apparatus of Sub Master are realized by an identical apparatus, a signal for different polarized wave removal and inter-control-unit communication may be made a control signal within an apparatus.

In addition, in the first exemplary embodiment, an exemplary embodiment in which the present invention is applied to a radio transmission apparatus and a radio transmission system has been described. However, the scope of the present invention is not limited to a radio transmission system. For example, the present invention can be applied to any communication method if it is a method that can perform multiplex communication using different polarized waves such as an optical space transmission method and an optical fiber transmission method.

### [Second exemplary embodiment]

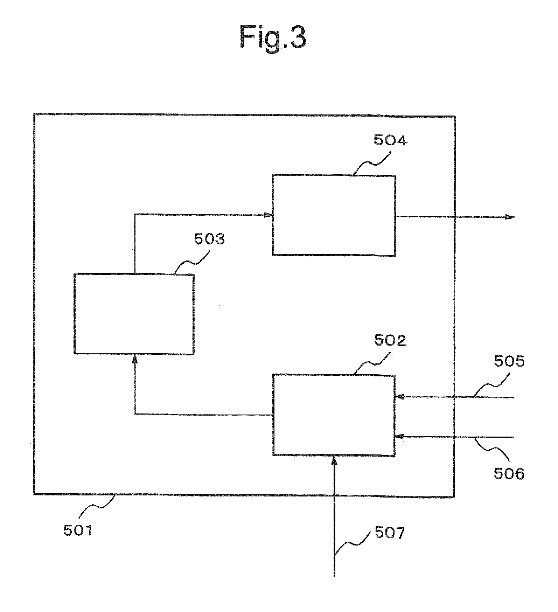

Fig. 3 is a diagram showing a structure of a transmission apparatus of the second exemplary embodiment of the present invention. A transmission apparatus 501 shown in Fig. 3 includes a reception means 502, a control means 503 and a transmission means 504. The reception means 502 receives a first signal 505 that has been transmitted by a first transmission apparatus that is not illustrated. The reception means 502 receives a second signal 506 that has been transmitted by a second transmission apparatus that is not illustrated along with the first signal 505. The reception means 502 receives a third signal 507 from a third transmission apparatus that is not illustrated and that receives the second signal 506. Then, the reception means 502 removes components of the second signal 506, the second signal 506 being received along with the first signal 505, using the third signal 507.

The control means 503 determines a modulation method based on the first signal 505, and generates first information. Here, the first information is information including directions to change the modulation method of the first signal and the modulation method of the second signal to a modulation method that is set by the control means 503.

The transmission means 504 transmits the first information to the first transmission apparatus.

By having such structure, the transmission apparatus 501 can change both of the modulation method of the first transmission apparatus which transmits the first signal 505 received by the transmission apparatus 501 and the modulation method of a second transmission apparatus 506 that transmits the second signal to a modulation method determined by the control means 503.

As a result of the modulation methods of the first signal 505 and the second signal 506 being changed to an identical modulation method determined by the control means 503, the transmission apparatus 501 can improve the efficiency when removing the second signal 506 that is included in the first signal 505 transmitted to the transmission apparatus 50 using the third signal 507.

That is, a transmission apparatus of the second exemplary embodiment has an effect that the efficiency of removing components of a signal, which is included in a received signal and is different from a target received signal, is improved.

Although the exemplary embodiments of the present invention have been described with reference to the first and second exemplary embodiments above, an applicable form of the present invention is not limited to the exemplary embodiments mentioned above. Various modifications which a person skilled in the art can understand can be made to the structure and detail description of the present invention within the scope of the present invention.

This application claims priority based on Japanese application Japanese Patent Application No. 2010-107075, filed on May 7, 2010, the disclosure of which is incorporated herein in its entirety.

### Description of Symbols

101, 111, 121, 131, 201, 211, 221 and 231 Radio transmission apparatus
102, 112, 122, 132, 202, 212, 222 and 232 Modulation unit
103, 113, 123, 133, 203, 213, 223 and 233 Control unit
104, 114, 124, 134, 204, 214, 224 and 234 Demodulation unit
1041, 1141, 1241, 1341, 2041, 2141, 2241 and 2341 XPIC Processing unit
105, 115, 125, 135, 205, 215, 225 and 235 Opposite modulation method determination result,
106,116, 126, 136, 206, 216, 226 and 23 6 Modulation method determination result
107, 117, 127,137, 207, 217, 227 and 237 Signal for different polarized wave removal
108, 118, 128, 138, 208, 218, 228 and 238 Modulation method setting value
209 and 229 Inter-control-unit communication
1001, 1101, 1201, 1301, 2001, 2101, 2201 and 2301 Antenna
10, 11, 20 and 21 Wireless section
1021,1121, 1221, 1321, 2021, 2121, 2221 and 2321 Transmission data
1043,1143, 1243, 1343, 2043, 2143, 2243 and 2343 Received data
501 Transmission apparatus
502 Reception means
503 Control means
504 Transmission means
505 First signal
506 Second signal
507 Third signal

## Claims

1. A transmission apparatus, comprising:
a reception means for receiving a first signal transmitted by a first transmission apparatus, and removing a component of a second signal transmitted by a second transmission apparatus, said second signal being received along with said first signal, using a third signal inputted from a third transmission apparatus receiving said second signal;
a control means for determining a first modulation method based on said first signal, and generating first information, said first information being information including directions to change a modulation method of said first signal and a modulation method of said second signal to said first modulation method; and
a transmission means for transmitting said first information to said first transmission apparatus.

2. The transmission apparatus according to claim 1, wherein
said third signal is a signal generated based on said second signal, and wherein
said reception means removes a component of said second signal included in said first signal by a cross polarization interference compensation method using said third signal.

3. The transmission apparatus according to claim 1 or 2, wherein
said control means makes a modulation method determined by said reception means based on receiving condition of said first signal be said first modulation method.

4. The transmission apparatus according to claim 1 or 2, wherein
said control means makes a modulation method extracted from said first signal by said reception means be said first modulation method.

5. The transmission apparatus according to claim 1 or 2, wherein
said control means determines a modulation method of said first signal using an adaptive modulation method.

6. The transmission apparatus according to any one of claims 1 to 5, wherein
said control means transmits said first information to said first transmission apparatus, upon change to a modulation method of said first signal being possible in said third transmission apparatus.

7. The transmission apparatus according to any one of claim 1 to 6, wherein
said transmission means modulates said first information by said first modulation method to transmit said modulated first information to said first transmission apparatus.

8. A transmission method, comprising the steps of:
receiving a first signal transmitted by a first transmission apparatus;
removing a component of a second signal transmitted by a second transmission apparatus, said second signal being received along with said first signal, using a third signal inputted from a third transmission apparatus receiving said second signal;
determining a first modulation method based on said first signal;
generating first information, said first information being information including directions to change a modulation method of said first signal and a modulation method of said second signal to said first modulation method; and
transmitting said first information to said first transmission apparatus.

9. A transmission system including a first to fourth transmission apparatus, each according to any one of claims 1 to 7, comprising:
arranging said first transmission apparatus opposite to said second transmission apparatus in a manner communicating with each other;
arranging said third transmission apparatus opposite to said fourth transmission apparatus in a manner communicating with each other;
connecting a control means of said first transmission apparatus and a control means of said second transmission apparatus; and
connecting a control means of said third transmission apparatus and a control means of said fourth transmission apparatus.
